# EUROPÄISCHE PATENTSCHRIFT

(11) **EP 1 781 559 B1**
(45) Veröffentlichungstag und Bekanntmachung des Hinweises auf die Patenterteilung: **02.09.2009**
(21) Anmeldenummer: 05774986.3
(22) Anmeldetag: 22.07.2005
(51) Int. Cl.: B65G 47/91

(54) **VERFAHREN ZUM BETREIBEN EINER UNTERDRUCKHANDHABUNGSEINRICHTUNG**
METHOD FOR OPERATING A VACUUM HANDLING DEVICE
PROCEDE POUR ACTIONNER UN DISPOSITIF DE MANIEMENT A DEPRESSION

(30) Priorität: 28.08.2004 DE 102004042825
(43) Veröffentlichungstag der Anmeldung: 09.05.2007
(73) Patentinhaber: J. Schmalz GmbH, 72293 Glatten (DE)
(72) Erfinder: DUNKMANN, Walter, 72213 Altensteig (DE); SCHMIERER, Gernot, 81669 München (DE)
(74) Vertreter: Steimle, Josef
(86) Internationale Anmeldenummer: PCT/EP2005/008011
(87) Internationale Veröffentlichungsnummer: WO 2006/024347

(56) Entgegenhaltungen:
- DE-A1- 10 151 883
- US-A- 5 201 560

## Beschreibung

Die Erfindung betrifft ein Verfahren zum Betreiben einer von einer an eine Maschinensteuerung anschließbaren programmierbaren Steuerung angesteuerten Unterdruckhandhabungseinrichtung gemäss dem Oberbegriff des Anspruchs 1. Ein derartiges Verfahren ist bereits aus DE1 015 1883 A1 bekannt.

Eine Unterdruckhandhabungseinrichtung besteht in der Regel aus einem Vakuumerzeuger, einer Ventiltechnik zum Steuern des Vakuums, einer Sensorik zur Überwachung des Vakuums und mindestens einem pneumatischen Greifermodul. Derartige Systeme werden sowohl im Bereich der manuellen Handhabung von Stückgütern als auch in der Automatisierungstechnik eingesetzt.

Gerade in der Automatisierungstechnik wird über eine zentrale Steuer- und Regeleinrichtung bei mehrere Greifermodule aufweisenden Flächengreifern jedes Greifermodul separat angesteuert, was zum einen einen enormen Aufwand bei der Vernetzung der Bauteile, zum anderen eine sehr hohe Fehleranfälligkeit mit sich bringt.

Die mit dem Aufbau dieser Unterdruckhandhabungseinrichtung verbundenen Kosten hängen maßgeblich von der Auswahl des Unterdruckerzeugers ab. Um diese Kosten in Grenzen halten zu können, werden mehrere Greifermodule gemeinsam von einem Unterdruckerzeuger versorgt.

Aus der DE 101 40 248 A1 ist eine Unterdruckhandhabungseinrichtung bekannt, mit der nicht nur poröse Werkstücke angesaugt sondern auch Werkstücke gehandhabt werden können, die kleiner sind als das Greiferfeld des Flächengreifers, das heißt es müssen nicht alle Greifermodule am Werkstück anliegen. Die nicht am Werkstück anliegenden Greifermodule können mittels eines Steuerventils abgeschaltet werden. Aus der US 4,252,497 ist ebenfalls ein Flächengreifer bekannt, bei dem einzelne Greifermodule angesteuert werden können.

Derartige Unterdruckhandhabungseinrichtungen unterliegen aber auch einem Verschleiß und sind störanfällig. Dies äußert sich in der Regel dadurch, dass der Unterdruckerzeuger öfter als normal eingeschaltet werden muss, um den erforderlichen Unterdruck bereit zu stellen. Diese Störungen können unter anderem ihre Ursache in defekten oder abgenutzten Greifermodulen, in undichten Leitungen, in undichten Leitungsverbindungen usw. haben. Die Störungsquelle festzustellen ist äußerst schwierig und es besteht keine Möglichkeit einer Prognose über die noch verbleibende Lebensdauer eines Bauteils.

Der Erfindung liegt daher die Aufgabe zugrunde, ein Verfahren zum Betreiben einer Unterdruckhandhabungseinrichtung vorzuschlagen, mit der auf einfache, sichere und schnelle Art und Weise Gegenstände ergriffen und angehoben werden können, wobei nicht unnötig Unterdruck verbraucht werden soll und frühzeitig ein Ausfall einer Bauteils ermittelbar ist.

Diese Aufgabe wird mit einem Verfahren der eingangs genannten Art erfindungsgemäß dadurch gelöst, dass in einem ersten Schaltzustand (vacuum on) der programmierbaren Steuerung das Steuerventil im Greifermodul geschlossen und mittels eines zweiten Drucksensors im Unterdruckerzeuger der Unterdruck bis zum Steuerventil erfasst wird.

Das erfindungsgemäße Verfahren sieht zunächst vor, dass der Unterdruckerzeuger und das Greifermodul nicht über die Maschinensteuerung sondern über eine separate programmierbare Steuerung angesteuert werden. Diese separate programmierbare Steuerung erhält ihre Steuerbefehle von der Maschinensteuerung. Demnach befindet sich die separate programmierbare Steuerung zwischen der Maschinensteuerung und dem Unterdruckerzeuger bzw. dem Greifermodul.

Die separate programmierbare Steuerung kennt wenigstens zwei Schaltzustände, nämlich die Bereitstellung des Unterdrucks (vacuum on) als den ersten Schaltzustand und den Befehl zum Ergreifen des Gegenstands (pick up) als den zweiten Schaltzustand. Im ersten Schaltzustand stellt der Unterdruckerzeuger Unterdruck bereit, wobei im Greifermodul das Steuerventil geschlossen wird. Somit wird zwischen dem Unterdruckerzeuger und dem Steuerventil im Greifermodul ein Unterdruck aufgebaut, der in den Zuleitungen bevorratet wird.

Der Unterdruckerzeuger weist einen Drucksensor (zweiter Drucksensor) auf, mit welchem der Unterdruck zwischen dem Unterdruckerzeuger und dem Steuerventil gemessen wird. Erreicht dieser Unterdruck einen insbesondere einstellbaren Grenzwert (vierter Grenzwert), dann schaltet der Unterdruckerzeuger ab. Dieser vierte Grenzwert liegt beispielsweise bei 750 mbar. In der programmierbaren Steuerung ist ein weiterer Grenzwert (dritter Grenzwert) abgespeichert, welcher z.B. bei 650 mbar liegt. Ist das System zwischen dem Unterdruckerzeuger und dem Steuerventil undicht, dann fällt der dort vorhandene Unterdruck allmählich ab. Erreicht der Unterdruck den dritten Grenzwert, dann schaltet sich in der Unterdruckerzeuger automatisch wieder ein, und erhöht den Unterdruck so lange, bis in dieser den vierten Grenzwert erreicht. Durch die Schalthäufigkeit des Unterdruckerzeugers kann also die Dichtigkeit des Unterdrucksystems zwischen dem Unterdruckerzeuger und dem Steuerventil überwacht werden.

In der programmierbaren Steuerung ist gemäß einem weiteren Ausführungsbeispiel einen fünfter Grenzwert abgespeichert, der geringfügig unterhalb des dritten Grenzwertes liegt. Liegt der Unterdruck oberhalb dieses fünften Grenzwertes, dann registriert die programmierbare Steuerung, dass der Mindestwert für den Unterdruck erreicht ist. Die Regelung inzwischen dem dritten und vierten Grenzwert erfolgt also stets oberhalb des fünften Grenzwertes.

Von Vorteil ist, dass der gewünschte Unterdruck im gesamten System bis zum Steuerventil im Greifermodul anliegt. Beim Ergreifen des Gegenstandes muss also nicht mehr die Unterdruckleitung inzwischen dem Unterdruckerzeuger und dem Greifermodul evakuiert werden. Außerdem stellt das System eine Art Speicher für den Unterdruck dar. Das Werkstück kann dadurch schneller angesaugt werden.

Erhält die programmierbare Steuerung den Befehl für den zweiten Schaltzustand (pick up), dann wird das Steuerventil im Greifermodul geöffnet. Die Evakuierung des Greifermoduls selbst erfolgt sehr schnell, da der zu evakuierende Raum relativ klein ist. Der Gegenstand wird also sehr schnell angesaugt und ergriffen. Sobald der gewünschte Unterdruck im Greifermodul erreicht ist, wird das Steuerventil geschlossen. Der Unterdruck im Greifermodul wird vom ersten Drucksensor überwacht, wodurch die Dichtigkeit des Greifermoduls festgestellt werden kann. Bei undichtem Greifermodul, was zum Beispiel bei einer abgenutzten Dichtlippe der Fall ist, sinkt der Unterdruck im Greifermodul relativ schnell ab, so dass das Steuerventil wieder geöffnet werden muss, wenn der Unterdruck einen vierten Grenzwert unterschreitet, um den gewünschten Unterdruck wieder herzustellen. Die Schalthäufigkeit des Steuerventils wird von der programmierbaren Steuerung überwacht, und dadurch die Dichtigkeit des Greifermoduls festgestellt. Demnächst ausfallende Greifermodule, die bereits eine gewisse verschleißbedingte Undichtigkeit besitzen, können also festgestellt werden.

Der Unterdruck im Greifermodul kann sehr schnell aufgebaut werden, da der vom Unterdruckerzeuger bereitgestellte Unterdruck bis zum Steuerventil anliegt. Erreicht dieser Unterdruck seinen unteren Grenzwert, denn wird, wie bereits erwähnt, der Unterdruckerzeuger wieder eingeschaltet und der Unterdruck im System angehoben.

Bei einem nicht am Werkstück anliegenden Greifermodul kann kein Unterdruck aufgebaut werden, da das Greifermodul aus der Umgebung Luft ansaugt. Dies wird sofort vom Drucksensor erkannt, sodass bei diesem Greifermodul das Steuerventil geschlossen wird. Auf diese Weise wird Unterdruck eingespart.

Das An- und Abschalten der Unterdruckerzeugers, das heißt dessen Schalthäufigkeit, wird ebenfalls von der programmierbaren Steuerung überwacht und dadurch Undichtigkeiten im System detektiert.

Die erfassten Daten werden in der programmierbaren Steuerung ausgewertet, sodass Informationen bzw. Nachrichten abgefragt oder, insbesondere automatisch, ausgegeben werden können. Dies kann zum Beispiel über ein firmeninternes Intranet (Ethernet) erfolgen. Die Ausgabe kann aber auch drahtlos erfolgen und/oder in Form einer E-Mail oder einer SMS.

Weitere Vorteile, Merkmale und Einzelheiten der Erfindung ergeben sich aus der nachfolgenden Beschreibung, in der unter Bezugnahme auf die Zeichnung ein besonders bevorzugtes Ausführungsbeispiel im Einzelnen beschrieben ist. Dabei können die in der Zeichnung dargestellten und/oder in der Beschreibung und in den Ansprüchen erwähnten Merkmale jeweils einzeln für sich oder in beliebiger Kombination erfindungswesentlich sein.

In der Zeichnung zeigen:
- Figur 1: eine schematische Wiedergabe eines Roboters mit einem Flächengreifer gemäß dem Stand der Technik;
- Figur 2: eine schematische Wiedergabe eines Roboters mit einem Flächengreifer gemäß der Erfindung;
- Figur 3: eine schematische Wiedergabe der Bauteile der programmierbaren Steuerung; und
- Figur 4: eine schematische Wiedergabe der Architektur der Steuerung.

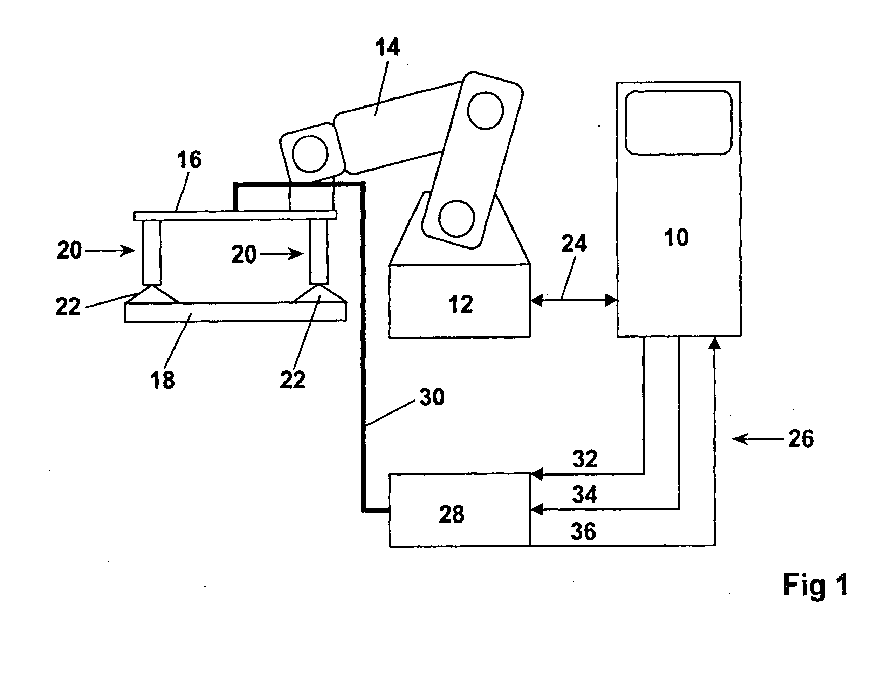

In der Figur 1 ist mit dem Bezugszeichen 10 eine Maschinensteuerung bezeichnet, mit der ein Roboter 12 angesteuert wird. Am Arm 14 des Roboters 12 ist ein insgesamt mit 16 bezeichneter Flächengreifer angeflanscht, mit welchem ein Werkstück 18 ergriffen und transportiert werden kann. Der Flächengreifer 16 besitzt mehrere Greifermodule 20, die jeweils mit einem Sauggreifer 22 das Werkstück 18 ansaugen. Die Maschinensteuerung 10 steuert über eine Leitung 24 direkt den Roboter 12 und über Leitungen 26 einen Unterdruckerzeuger 28 an. Der Unterdruckerzeuger 28 ist über eine Unterdruckleitung 30 mit dem Flächengreifer 16 verbunden. Über die Leitungen 26 erhält der Unterdruckerzeuger 28 einen Befehl 32 (pick up) für das Ansaugen und Anheben des Werkstücks 18, einen Befehl 34 (release) für das Abblasen und Loslassen des Werkstücks 18. Außerdem erhält die Maschinensteuerung 10 vom Unterdruckerzeuger 28 einen Befehl 36 für das Vorhandensein des Unterdrucks. Ein derartiger Aufbau entspricht dem Stand der Technik, wobei die einzelnen Greifermodule 20 nicht einzeln ansteuerbar sind.

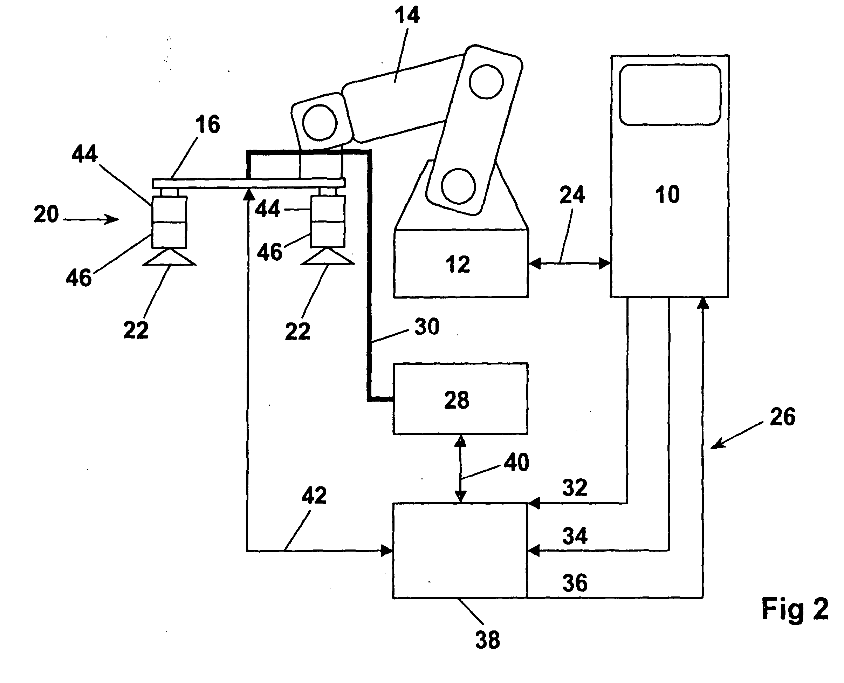

Die Figur 2 zeigt einen Aufbau gemäß der Erfindung, wobei zwischen dem Unterdruckerzeuger 28 und der Maschinensteuerung 10 eine separate programmierbare Steuerung 38 zwischengeschaltet ist. Die Verknüpfung der programmierbaren Steuerung 38 und des Unterdruckerzeugers 28 erfolgt über eine Leitung 40. Außerdem ist die programmierbare Steuerung 38 über einen Feldbus 42 mit dem Flächengreifer 16 gekoppelt. Außerdem ist in Figur 2 erkennbar, dass jedes Greifermodul 21 ein Steuerventil 44 sowie einen Drucksensor 46 aufweist. Mit dem Steuerventil 44 kann das Greifermodul 20 von der Unterdruckleitung 30 abgekoppelt werden, wobei der Drucksensor 46 den Unterdruck im Greifermodul 20, insbesondere im Sauggreifer 22 erfasst.

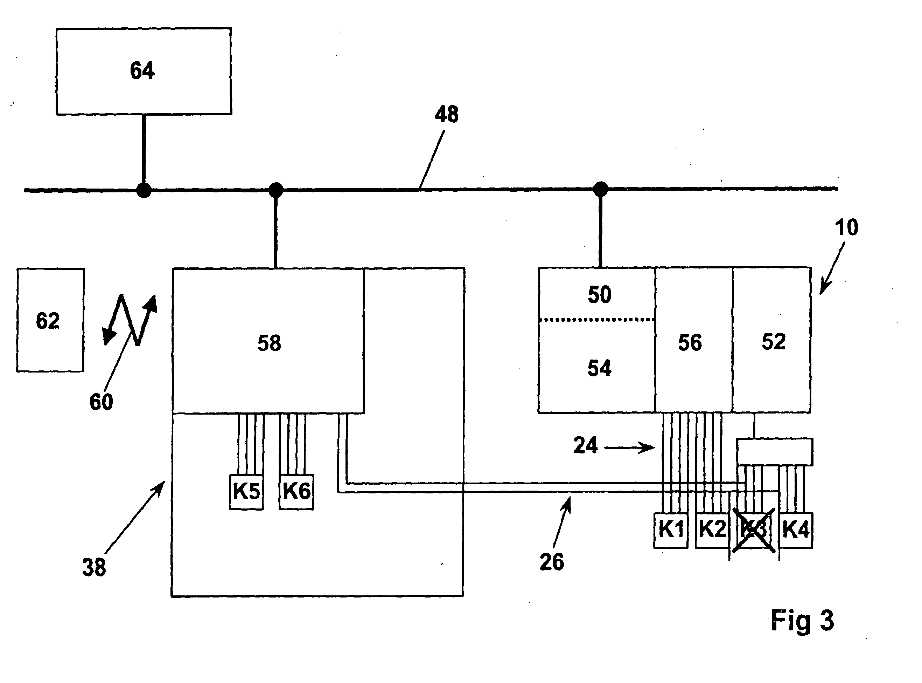

Die Figur 3 zeigt eine Übersicht der Bauteile für die Steuerung des Flächengreifers 16, wobei die Maschinensteuerung 10 sowie die programmierbare Steuerung 38, die beide an eine Intranetleitung 48 angeschlossen sind, erkennbar sind. Die Maschinensteuerung 10 besitzt eine Schnittstelle 50 für das Intranet, eine Schnittstelle 52 für den Feldbus, eine Robotersteuerung 54 sowie eine Schnittstelle 56 für die Ausgabe und den Empfang von Daten über die Leitungen 24 und 26. Die programmierbare Steuerung 38 besitzt einen Schaltungsteil 58, in welchem die Schnittstelle für das Intranet enthalten ist. Außerdem kann in der programmierbaren Steuerung 38 noch eine Schnittstelle für eine drahtlose (Bezugszeichen 60) Datenübermittlung an externe Aufzeichnungsgeräte 62, zum Beispiel ein Palmtop oder dergleichen vorhanden sein. Über die drahtlose Datenübermittlung können Daten in Form von E-Mail, SMS oder auf andere Weise übermittelt und im Aufzeichnungsgerät 62 visualisiert werden. An die Intranetleitung 48 kann außerdem ein Laptop oder PC 64 angeschlossen werden.

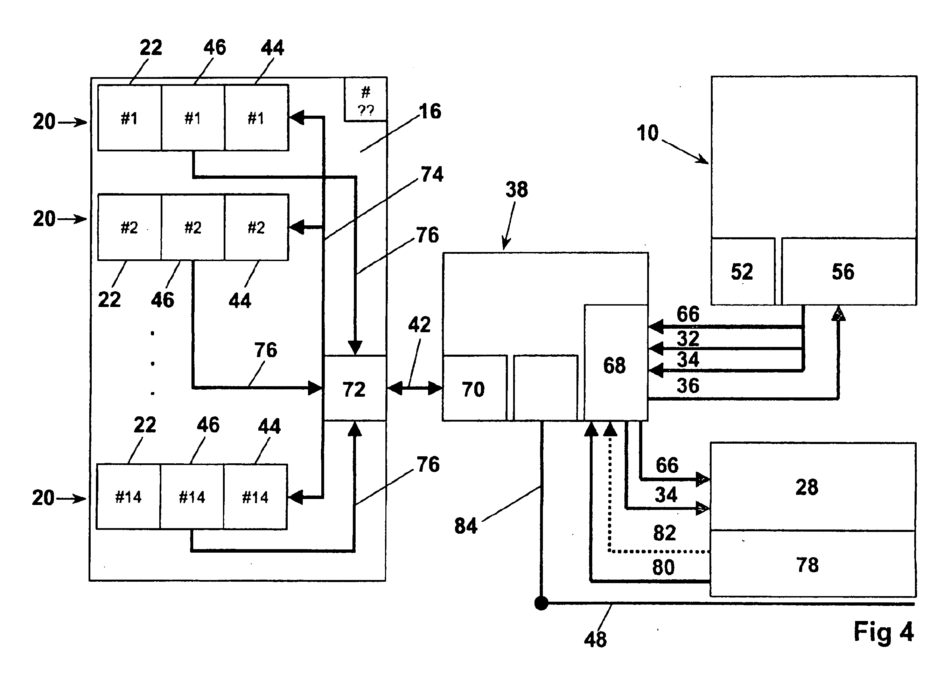

In der Figur 4, die die Architektur der Steuerung zeigt, ist erkennbar, dass zusätzlich zu den Befehlen 32 und 34 noch ein Befehl 66 für das Anschalten des Unterdrucks (vakuum on) von der Maschinensteuerung 10 an die programmierbare Steuerung 38 ausgegeben wird, was in der Regel mit dem Einschalten bzw. mit der Bereitschaft der Maschinensteuerung 10 erfolgt. Diese Befehle werden von einer Schnittstelle 68 in der programmierbaren Steuerung 38 empfangenen (bzw. ausgegeben für den Befehl 36), wobei über eine Schnittstelle 70 der Feldbus 42 an eine Schnittstelle 72 des Flächengreifers 16 angeschlossen ist. In diesem Flächengreifer 16 befinden sich mehrere Greifermodule 20, deren Steuerventile 44 über eine Leitung 74 angesteuert werden. Die von den Drucksensoren 46 erfassten Daten werden über Leitungen 76 der Schnittstelle 72 und über den Feldbus 42 der Schnittstelle 70 und somit der programmierbaren Steuerung 38 zugeführt.

Die programmierbare Steuerung 38 steuert, wie bereits erwähnt, den Unterdruckerzeuger 28 an, indem dieser die Befehle 66 für das Anschalten des Unterdrucks und 34 für das Abschalten des Vakuums erhält. Der Unterdruckerzeuger 28 ist ebenfalls mit einem Drucksensor 78 versehen, mit dem das Vorhandensein von Unterdruck ermittelt wird. Der Grenzwert dieses Drucksensors 78 liegt z.B. bei 740 mbar. Über die Leitung 80 wird an die Schnittstelle 68 der programmierbaren Steuerung 38 ein Signal ausgegeben, wenn diese Grenzwert erreicht ist.

Die Schalthäufigkeit des Unterdruckerzeugers 28 wird über eine Leitung 82 der programmierbaren Steuerung 38 mitgeteilt. Aus diesen Daten kann die Dichtigkeit des Systems zwischen dem Unterdruckerzeuger 28 und dem Steuerventil 44 ermittelt werden. Aus der Schalthäufigkeit der Steuerventile 44, die über den Feldbus 42 weitergeleitet wird, kann die Dichtigkeit der einzelnen Sauggreifer 22 ermittelt werden. Über eine Leitung 84 ist die programmierbare Steuerung 38 an das Intranet 48 angeschlossen und kann bei Bedarf Daten bezüglich des Unterdruckerzeugers 28 und/oder der einzelnen Greifermodule 20 ausgeben. Außerdem können Parameter der programmierbaren Steuerung 38 über die Leitung 84 eingestellt werden.

## Patentansprüche

1. Verfahren zum Betreiben einer von einer an eine Maschinensteuerung (10) anschließbaren programmierbaren Steuerung (38) angesteuerten Unterdruckhandhabungseinrichtung mit mindestens einem Unterdruckerzeuger (28) und mit mehreren am Unterdruckerzeuger (28) angeschlossenen Greifermodulen (20), welche jeweils mit einem ersten Drucksensor (46) und einem Steuerventil (44) für den Unterdruck im Greifermodul (20) ausgestattet und an die programmierbare Steuerung (38) angeschlossen sind, **dadurch gekennzeichnet, dass** in einem ersten Schaltzustand (vacuum on) der programmierbaren Steuerung (38) das Steuerventil (44) im Greifermodul (20) geschlossen und mittels eines zweiten Drucksensors (78) im Unterdruckerzeuger (28) der Unterdruck bis zum Steuerventil (44) erfasst wird.

2. Verfahren nach Anspruch 1, **dadurch gekennzeichnet, dass** in einem zweiten Schaltzustand (pick up) der programmierbaren Steuerung (38) das Steuerventil (44) geöffnet und der Unterdruck im Greifermodul (20) so lange aufgebaut wird, bis ein erster Grenzwert erreicht wird und dann das Steuerventil (44) geschlossen wird.

3. Verfahren nach Anspruch 2, **dadurch gekennzeichnet, dass** der Unterdruck im Greifermodul (20) mittels des ersten Drucksensors (46) überwacht wird.

4. Verfahren nach einem der vorhergehenden Ansprüche, **dadurch gekennzeichnet, dass** der Unterdruckerzeuger (28) abgeschaltet wird, wenn der vom zweiten Drucksensor (78) erfasste Unterdruck bis zum Steuerventil (44) einen zweiten Grenzwert, insbesondere 750 mbar überschreitet.

5. Verfahren nach einem der vorhergehenden Ansprüche, **dadurch gekennzeichnet, dass** der Unterdruckerzeuger (28) angeschaltet wird, wenn der vom zweiten Drucksensor (78) erfasste Unterdruck bis zum Steuerventil (44) einen dritten Grenzwert, insbesondere 650 mbar unterschreitet.

6. Verfahren nach einem der vorhergehenden Ansprüche, **dadurch gekennzeichnet, dass** das Steuerventil (44) im Greifermodul (20) geöffnet wird, wenn der vom ersten Drucksensor (46) erfasste Unterdruck im Greifermodul (20) einen vierten Grenzwert unterschreitet.

7. Verfahren nach der vorhergehenden Ansprüche, **dadurch gekennzeichnet, dass** bei Unterschreiten des vom zweiten Drucksensor (78) erfassten Unterdrucks bis zum Steuerventil (44) unter einen fünften Grenzwert, insbesondere 640 mbar, ein Signal für zu geringen Unterdruck an die programmierbare Steuerung (38) abgegeben wird.

8. Verfahren nach der vorhergehenden Ansprüche, **dadurch gekennzeichnet, dass** die Schaltzyklen des Unterdruckerzeugers (28) im ersten Schaltzustand der programmierbaren Steuerung (38) überwacht und gegebenenfalls ausgewertet werden.

9. Verfahren nach der vorhergehenden Ansprüche, **dadurch gekennzeichnet, dass** die Schaltzyklen des Steuerventils (44) des Greifermoduls (20) im zweiten Schaltzustand der programmierbaren Steuerung (38) überwacht und gegebenenfalls ausgewertet werden.

10. Verfahren nach Anspruch 8 oder 9, **dadurch gekennzeichnet, dass** die Überwachung und/oder Auswertung in der programmierbaren Steuerung (38) erfolgt.

11. Verfahren nach Anspruch 8 oder 10, **dadurch gekennzeichnet, dass** mittels der Schalthäufigkeit des Unterdruckerzeugers (28) die Dichtigkeit des Unterdrucksystems vom Unterdruckerzeuger (28) bis zum Steuerventil (44) überwacht wird.

12. Verfahren nach Anspruch 9 oder 10, **dadurch gekennzeichnet, dass** mittels der Schalthäufigkeit des Steuerventils (44) des Greifermoduls (20) die Dichtigkeit und/oder Verschleiß des Greifermoduls (20) überwacht wird.

13. Verfahren nach der vorhergehenden Ansprüche, **dadurch gekennzeichnet, dass** errechnete oder von den Drucksensoren (46, 78) ermittelte Daten über eine Schnittstelle der programmierbaren Steuerung (38) nach extern ausgegeben werden.

14. Verfahren nach Anspruch 13, **dadurch gekennzeichnet, dass** die Ausgabe automatisch erfolgt.

15. Verfahren nach Anspruch 13 oder 14, **dadurch gekennzeichnet, dass** die Ausgabe mittels einer Email, einer SMS oder dergleichen erfolgt.

16. Verfahren nach einem der Ansprüche 13 bis 15, **dadurch gekennzeichnet, dass** die Schnittstelle drahtgebunden oder drahtlos ist.

17. Verfahren nach einem der Ansprüche 13 bis 16, **dadurch gekennzeichnet, dass** über die Daten die Funktionsqualität von Bauteilen mitgeteilt wird.

## Claims

1. Method for operating a vacuum handling device which is controlled by a programmable controller (38) which can be connected to a machine controller (10), with at least one vacuum generator (28) and with several gripper modules (20) which are connected to the vacuum generator (28), each being provided with a first pressure sensor (46) and a control valve (44) for the negative pressure in the gripper module (20), and are connected to the programmable controller (38), **characterized in that** the control valve (44) in the gripper module (20) is closed in a first switching state (vacuum on) of the programmable controller (38), and the negative pressure up to control valve (44) is detected by a second pressure sensor (78) in the vacuum generator (28).

2. Method according to claim 1, **characterized in that** in a second switching state (pick up) of the programmable controller (38), the control valve (44) is opened and the negative pressure in the gripper module (20) is built up until a first limit value has been reached, followed by closing of the control valve (44).

3. Method according to claim 2, **characterized in that** the negative pressure in the gripper module (20) is monitored by the first pressure sensor (46).

4. Method according to any one of the preceding claims, **characterized in that** the vacuum generator (28) is switched off when the negative pressure up to the control valve (44), which is detected by the second pressure sensor (78), exceeds a second limit value, in particular, 750 mbar.

5. Method according to any one of the preceding claims, **characterized in that** the vacuum generator (28) is switched on when the negative pressure up to the control valve (44), which is detected by the second pressure sensor (78), falls below a third limit value, in particular 650 mbar.

6. Method according to any one of the preceding claims, **characterized in that** the control valve (44) in the gripper module (20) is opened when the negative pressure in the gripper module (20), which is detected by the first pressure sensor (46), falls below a fourth limit value.

7. Method according to any one of the preceding claims, **characterized in that**, when the negative pressure up to the control valve (44), which is detected by the second pressure sensor (78), falls below a fifth limit value, in particular 640 mbar, a signal indicating an insufficient negative pressure is output to the programmable controller (38).

8. Method according to any one of the preceding claims, **characterized in that** the switching cycles of the vacuum generator (28) in the first switching state of the programmable controller (38) are monitored and optionally evaluated.

9. Method according to any one of the preceding claims, **characterized in that** the switching cycles of the control valve (44) of the gripper module (20) in the second switching state of the programmable controller (38) are monitored and optionally evaluated.

10. Method according to claim 8 or 9, **characterized in that** monitoring and/or evaluation is performed in the programmable controller (38).

11. Method according to claim 8 or 10, **characterized in that** the tightness of the vacuum system is monitored from the vacuum generator (28) up to the control valve (44) using the switching frequency of the vacuum generator (28).

12. Method according to claim 9 or 10, **characterized in that** the tightness and/or the wear of the gripper module (20) is monitored using the switching frequency of the control valve (44) of the gripper module (20).

13. Method according to any one of the preceding claims, **characterized in that** data, which are calculated or determined by the pressure sensors (46, 78), are output by an interface of the programmable controller (38) to an external location.

14. Method according to claim 13, **characterized in that** the output is performed automatically.

15. Method according to claim 13 or 14, **characterized in that** the output is performed by e-mail, sms or the like.

16. Method according to any one of the claims 13 through 15, **characterized in that** the interface is a wire connection or a wire-less connection.

17. Method according to any one of the claims 13 through 16, **characterized in that** the function quality of components is communicated through the data.

## Revendications

1. Procédé d'exploitation d'une installation de manipulation par le vide, pilotée par un contrôleur programmable (38) pouvant être connecté à un contrôleur de machine (10), l'installation comprenant au moins un générateur de dépression (28) et plusieurs modules de préhension (20) raccordés au générateur de dépression (28), chaque module étant équipé d'un premier capteur de pression (46) et d'une vanne-pilote (44) pour la dépression dans le module de préhension (20) et étant connecté au contrôleur programmable (38), **caractérisé en ce que** dans un premier état de commutation (vacuum on) du contrôleur programmable (38) la vanne-pilote (44) dans le module de préhension (20) est fermée, et au moyen d'un deuxième capteur de pression (78) dans le générateur de dépression (28), la dépression jusqu'à la vanne-pilote (44) est détectée.

2. Procédé selon la revendication 1, **caractérisé en ce que** dans un deuxième état de commutation (pick up) du contrôleur programmable (38), la vanne-pilote (44) est ouverte et la dépression dans le module de préhension (20) est établie jusqu'à ce qu'une première valeur limite soit atteinte et ensuite la vanne-pilote (44) est fermée.

3. Procédé selon la revendication 2, **caractérisé en ce que** la dépression dans le module de préhension (20) est surveillée au moyen du premier capteur de pression (46).

4. Procédé selon l'une quelconque des revendications précédentes, **caractérisé en ce que** le générateur de dépression (28) est déconnecté lorsque la dépression jusqu'à la vanne-pilote (44), détectée par le deuxième capteur de pression (78), dépasse une deuxième valeur limite, en particulier 750 mbar.

5. Procédé selon l'une quelconque des revendications précédentes, **caractérisé en ce que** le générateur de dépression (28) est déconnecté lorsque la dépression jusqu'à la vanne-pilote (44), détectée par le deuxième capteur de pression (78) passe sous une troisième valeur limite, en particulier 650 mbar.

6. Procédé selon l'une quelconque des revendications précédentes, **caractérisé en ce que** la vanne-pilote (44) dans le module de préhension (20) est ouverte lorsque la dépression détectée par le premier capteur de pression (46) dans le module de préhension (20) passe sous une quatrième valeur limite.

7. Procédé selon l'une quelconque des revendications précédentes, **caractérisé en ce qu'**au cas où la dépression jusqu'à la vanne-pilote (44), détectée par le deuxième capteur de pression (78), passe sous une cinquième valeur limite, en particulier 640 mbar, un signal pour une dépression trop faible est délivré au contrôleur programmable (38).

8. Procédé selon l'une quelconque des revendications précédentes, **caractérisé en ce que** les cycles de commutation du générateur de dépression (28) dans le premier état de commutation du contrôleur programmable (38) sont surveillés et éventuellement évalués.

9. Procédé selon l'une quelconque des revendications précédentes, **caractérisé en ce que** les cycles de commutation de la vanne-pilote (44) du module de préhension (20) dans le deuxième état de commutation du contrôleur programmable (38) sont surveillés et éventuellement évalués.

10. Procédé selon la revendication 8 ou 9, **caractérisé en ce que** la surveillance et/ou l'évaluation a/ont lieu dans le contrôleur programmable (38).

11. Procédé selon la revendication 8 ou 10, **caractérisé en ce qu'**au moyen de la fréquence de commutation du générateur de dépression (28) l'étanchéité du système à dépression du générateur de dépression (28) jusqu'à la vanne-pilote (44) est surveillée.

12. Procédé selon la revendication 9 ou 10, **caractérisé en ce qu'**au moyen de la fréquence de commutation de la vanne-pilote (44) du module de préhension (20), l'étanchéité et/ou l'usure du module de préhension (20) est/sont surveillée(s).

13. Procédé selon l'une quelconque des revendications précédentes, **caractérisé en ce que** des données calculées ou déterminées par les capteurs de pression (46, 78) sont sorties à l'extérieur par l'intermédiaire d'une interface du contrôleur programmable (38).

14. Procédé selon la revendication 13, **caractérisé en ce que** la sortie est effectuée automatiquement.

15. Procédé selon la revendication 13 ou 14, **caractérisé en ce que** la sortie est effectuée au moyen d'un courrier électronique, d'un SMS ou similaires.

16. Procédé selon l'une quelconque des revendications 13 à 15, **caractérisé en ce que** l'interface est câblée ou sans fil.

17. Procédé selon l'une quelconque des revendications 13 à 16, **caractérisé en ce que** les données communiquent la qualité de fonctionnement de certains composants.
